# EUROPEAN PATENT APPLICATION

(11) **EP 4 553 808 A1**
(43) Date of publication of application: **14.05.2025**
(21) Application number: 24151124.5
(22) Date of filing: 10.01.2024
(51) Int. Cl.: G08G 1/04, B60R 1/00, G06V 20/56, G06V 20/58, G08G 1/16

(54) **INTER-VEHICLE COMMUNICATION SEE-THROUGH WARNING SYSTEM AND INTER-VEHICLE COMMUNICATION SEE-THROUGH WARNING METHOD**

(30) Priority: 13.11.2023 TW 112143722
(71) Applicant: Industrial Technology Research Institute, 310401 Hsinchu (TW)
(72) Inventor: Hsu, Kuo-Huang, 116 Taipei City (TW); Hsieh, Tien-Yuan, 310 Zhudong Township, Hsinchu County (TW); Tsai, Pei-Chuan, 310 Zhudong Township, Hsinchu County (TW)
(74) Representative: Kurig, Thomas

(57) **Abstract**

An inter-vehicle communication see-through warning method includes steps below. A first image (IMGI) is captured from a first field of view of a front vehicle and a second image (IMG2) is captured from a second field of view of a rear vehicle. One or more first objects are identified in the first image (IMG1). One or more second objects are identified in the second image (IMG2). In response to determining that the one or more first objects include one or more first risk objects, corresponding first risk object information is transmitted to the rear vehicle. One or more first target objects among the first risk objects that are not the second objects are marked in the displayed second image (IMG2) according to the first risk object information.

## Description

### BACKGROUND

### Technical Field

The disclosure relates to an inter-vehicle communication see-through warning system and an inter-vehicle communication see-through warning method.

### Related Art

The see-through system is one of safety applications of the advanced driver assistance system (ADAS) for overtaking operations of visually obstructed vehicles. The see-through system provides image streaming between a front vehicle and a rear vehicle using vehicle-to-everything (V2X) low-latency technology, and further employs image stitching technology in combination to enable the overtaking vehicle to see the view of the road from the perspective of the front vehicle, which thus enhances the driver's visual perception of vehicles driving in the opposite lane.

Currently, the mainstream see-through system technology mainly discusses how to improve the performance of the see-through system, or focuses on how to perfectly stitch the image of the front vehicle to the image of the rear vehicle. However, such technology does not incorporate dangerous object images detected by the front vehicle into the stitching of the image of the rear vehicle, which may cause driving hazards.

### SUMMARY

An embodiment of the disclosure provides an inter-vehicle communication see-through warning system including a front-vehicle terminal and a rear-vehicle terminal. The front-vehicle terminal is arranged on a front vehicle and includes a first processor, a first camera, and a first communication circuit device. The rear-vehicle terminal is arranged on a rear vehicle and includes a second processor, a second camera, and a display. The first camera is configured to capture a first image, the second camera is configured to capture a second image, and the display is configured to display the second image. In response to determining that one or more first objects in the first image include one or more first risk objects, the first processor generates first risk object information corresponding to the one or more first risk objects, and transmits the first risk object information to the rear-vehicle terminal via an inter-vehicle connection between the front-vehicle terminal and the rear-vehicle terminal. In response to determining that one or more first target objects among the one or more first risk objects are not one or more second objects in the second image, the second processor marks the one or more first target objects in the displayed second image according to the first risk object information to warn of risks that are not visible in a field of view of the rear vehicle.

Another embodiment of the disclosure provides an inter-vehicle communication see-through warning method, applicable to an inter-vehicle communication see-through warning system including a front-vehicle terminal arranged on a front vehicle and a rear-vehicle terminal arranged on a rear vehicle. The inter-vehicle communication see-through warning method includes steps below. A first image is captured by the front-vehicle terminal, a second image is captured by the rear-vehicle terminal, and the second image is displayed. In response to determining that one or more first objects in the first image include one or more first risk objects, the front-vehicle terminal generates first risk object information corresponding to the one or more first risk objects, and transmits the first risk object information to the rear-vehicle terminal via an inter-vehicle connection between the front-vehicle terminal and the rear-vehicle terminal. In response to determining that one or more first target objects among the one or more first risk objects are not one or more second objects in the second image, the rear-vehicle terminal marks the one or more first target objects in the displayed second image according to the first risk object information to warn of risks that are not visible in a field of view of the rear vehicle.

### BRIEF DESCRIPTION OF DRAWINGS

FIG. 1 is a block diagram of an inter-vehicle communication see-through warning system illustrated according to an embodiment of the disclosure.
FIG. 2 is a schematic diagram of data stored in a storage circuit device illustrated according to an embodiment of the disclosure.
FIG. 3A is an operational flowchart of an inter-vehicle communication see-through warning method illustrated according to an embodiment of the disclosure.
FIG. 3B is another operational flowchart of the inter-vehicle communication see-through warning method illustrated according to an embodiment of the disclosure.
FIG. 4A is a schematic diagram of a see-through projection algorithm illustrated according to an embodiment of the disclosure.
FIG. 4B is a schematic diagram of inter-vehicle seeing through formed by image stitching illustrated according to an embodiment of the disclosure.
FIG. 5 is a schematic top view of a traffic scenario illustrated according to an embodiment of the disclosure.
FIG. 6A is a schematic diagram of a first image captured by a front vehicle illustrated according to an embodiment of the disclosure.
FIG. 6B is a schematic diagram of a second image captured by a rear vehicle illustrated according to an embodiment of the disclosure.
FIG. 7A is a schematic diagram of setting a see-through area according to a front-vehicle object illustrated according to an embodiment of the disclosure.
FIG. 7B is a schematic diagram of setting a partial area image in the first image according to the see-through area illustrated according to an embodiment of the disclosure.
FIG. 8 is a schematic diagram of stitching the area image to the see-through area of the second image illustrated according to an embodiment of the disclosure.
FIG. 9 is a schematic diagram of identifying a plurality of risk objects illustrated according to an embodiment of the disclosure.
FIG. 10A is a schematic diagram of marking a first risk object determined by the front vehicle in the second image, illustrated according to an embodiment of the disclosure.
FIG. 10B is a schematic diagram of marking the first risk object determined by the front vehicle and displaying the first risk object outside the see-through area in the second image, illustrated according to an embodiment of the disclosure.
FIG. 10C is a schematic diagram of marking the first risk object determined by the front vehicle, displaying the first risk object outside the see-through area, and marking a second risk object determined by the rear vehicle in the second image, illustrated according to an embodiment of the disclosure.

### DESCRIPTION OF EMBODIMENTS

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

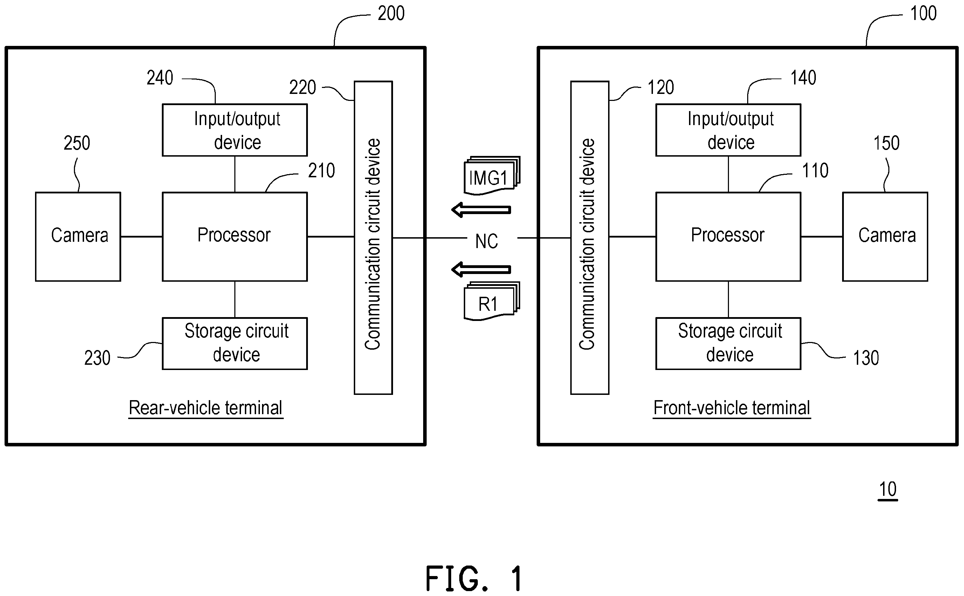

Referring to FIG. 1, in this embodiment, an inter-vehicle communication see-through warning system 10 includes a front-vehicle terminal 100 and a rear-vehicle terminal 200. An inter-vehicle connection NC is provided between the front-vehicle terminal 100 and the rear-vehicle terminal 200. The front-vehicle terminal 100 includes a first processor 110, a first communication circuit device 120, a first storage circuit device 130, a first input/output device 140, and a first camera 150. The rear-vehicle terminal 200 includes a second processor 210, a second communication circuit device 220, a second storage circuit device 230, a second input/output device 240, and a second camera 250.

The first communication circuit device 120 and the second communication circuit device 220 are configured to establish the inter-vehicle connection NC between the front-vehicle terminal 100 and the rear-vehicle terminal 200 via the vehicle-to-vehicle (V2V) communication protocol. The front-vehicle terminal 100 and the rear-vehicle terminal 200 may transmit data via the inter-vehicle connection NC. For example, the front-vehicle terminal 100 may send a first image IMG1 captured by the first camera 150 to the rear-vehicle terminal 200 via the inter-vehicle connection NC, and may also send generated risk object information RI to the rear-vehicle terminal 200.

The processors 110 and 210 are, for example, microprogrammed control units, central processing units (CPU), programmable microprocessors, application specific integrated circuits (ASIC), programmable logic devices (PLD), or other similar devices.

The communication circuit devices 120 and 220 are respectively coupled to the processors 110 and 210, and are configured to transmit or receive data via wired or wireless communication. In this embodiment, the communication circuit device may include a wireless communication circuit module (not shown), and may be compatible with one or a combination of the Global System for Mobile Communication (GSM) system, the Wireless Fidelity (WiFi) system, mobile communication technologies of different generations (e.g., 3G to 6G), and the Bluetooth communication technology, but is not limited thereto.

The storage circuit devices 130 and 230 are coupled to the processors 110 and 210. The storage circuit devices 130 and 230 may store data according to instructions of the processors 110 and 210. The storage circuit device includes any type of hard disk drive (HDD) or non-volatile memory storage device (e.g., SSD). In an embodiment, the storage circuit device further includes a memory for temporarily storing commands or data executed by the processor, such as a dynamic random access memory (DRAM), a static random access memory (SRAM), etc.

The input/output devices 140 and 240 include input devices and output devices. The input devices, for example, are microphones, touchpads, touch panels, knobs, buttons, etc., and are configured to enable users to input data or control the functions the users want to operate. The output devices are, for example, displays (configured to receive display screen data to display images), speakers (configured to receive audio data to emit sound effects), etc., but the disclosure is not limited thereto. In an embodiment, the input/output devices 140 and 240 may be touch screens.

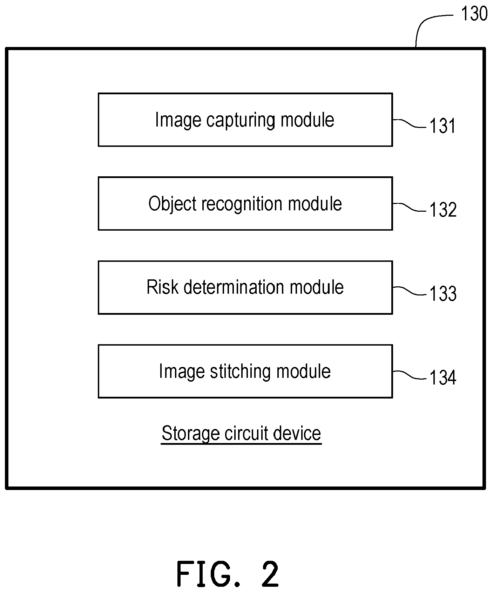

Referring to FIG. 2, in this embodiment, the storage circuit devices 130 and 230 may store a plurality of program modules. For example, the storage circuit device 130 stores an image capturing module 131, an object recognition module 132, a risk determination module 133, and an image stitching module 134. The processor 110 executes the image capturing module 131 to control the first camera 150 to capture images. The processor 110 executes the object recognition module 132 to perform object recognition operations on the captured images to identify one or more objects in the captured images. The processor 110 executes the risk determination module 133 to perform risk determination on the identified objects to determine whether each of the one or more objects is a risk object. The processor 110 executes the image stitching module 134 to perform image stitching/image synthesis on each portion of the determined image, and executes corresponding marking to generate the required image content. In another embodiment, the program modules 131 to 134 may all be implemented as hardware circuit devices to realize corresponding functions.

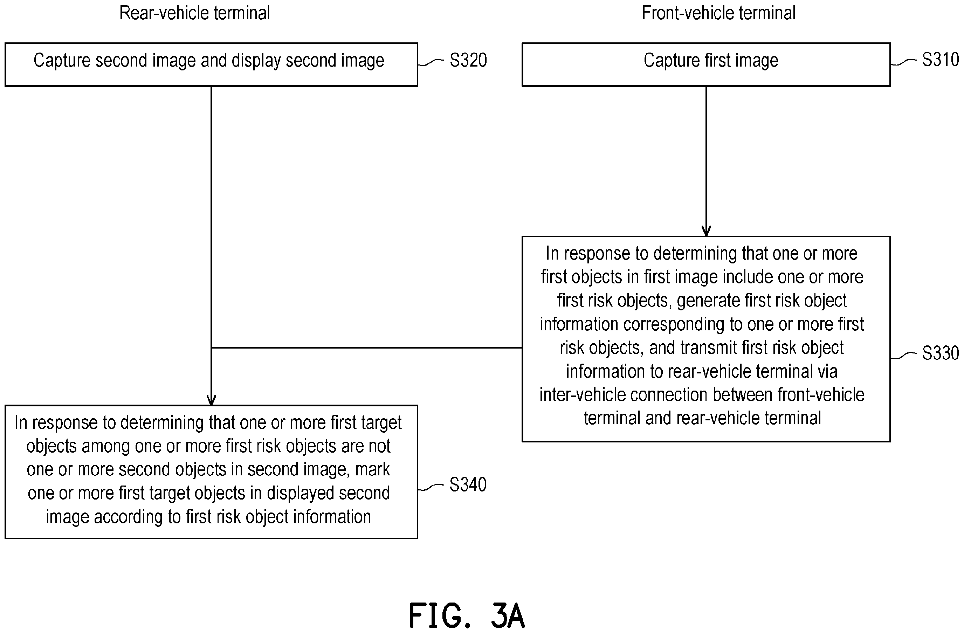

Referring to FIG. 3A, in an embodiment, the rear-vehicle terminal may mark a risk object that is visible to the front vehicle but not visible to the rear vehicle in the image displayed by the rear vehicle according to the risk object information provided by the front-vehicle terminal.

Specifically, in step S310, the first camera 150 captures a first image. In addition, in step S320, the second camera 250 captures a second image, and the input/output device 240 displays the second image. Then, in step S330, in response to determining that one or more first objects in the first image include one or more first risk objects, the first processor 110 further generates first risk object information corresponding to the one or more first risk objects, and transmits the first risk object information to the rear-vehicle terminal via the inter-vehicle connection between the front-vehicle terminal and the rear-vehicle terminal. Then, in step S340, in response to determining that one or more first target objects among the one or more first risk objects are not one or more second objects in the second image, the second processor 210 further marks the one or more first target objects in the displayed second image according to the first risk object information.

In another embodiment, the second image further includes a portion of the first image to form a see-through effect corresponding to the front vehicle.

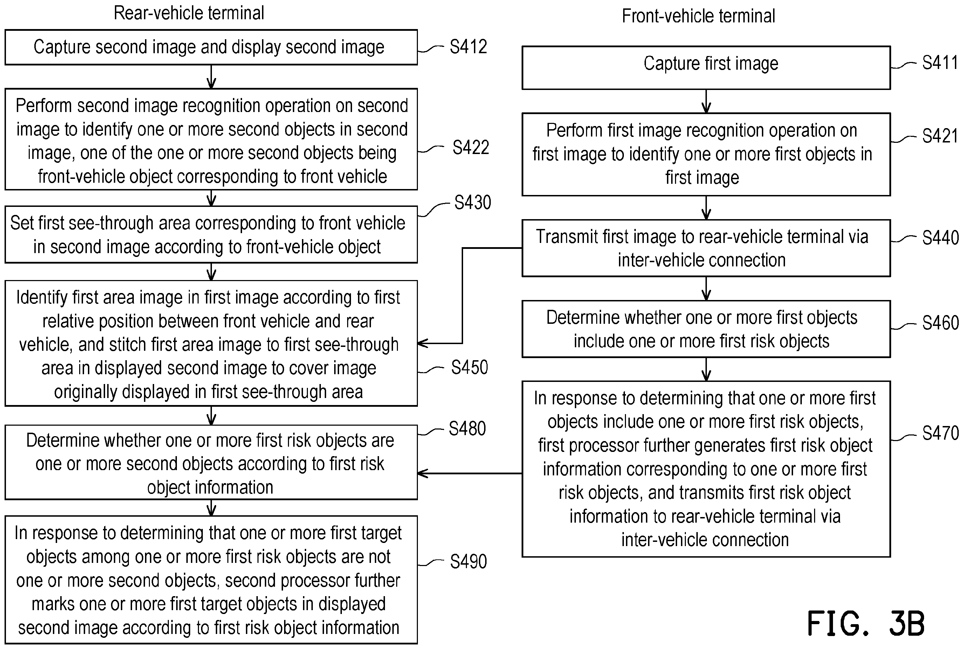

Referring to FIG. 3B, in FIG. 3B, step S411 is similar to step S310, step S412 is similar to step S320, step S470 is similar to step S330, and step S490 is similar to step S340. The details of steps S310, S320, S330, and S340 will be described together in the following description of steps S411, S412, S470, and S490.

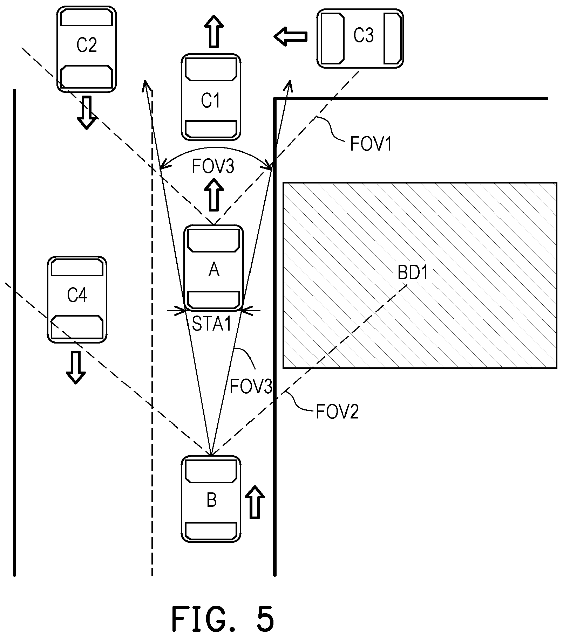

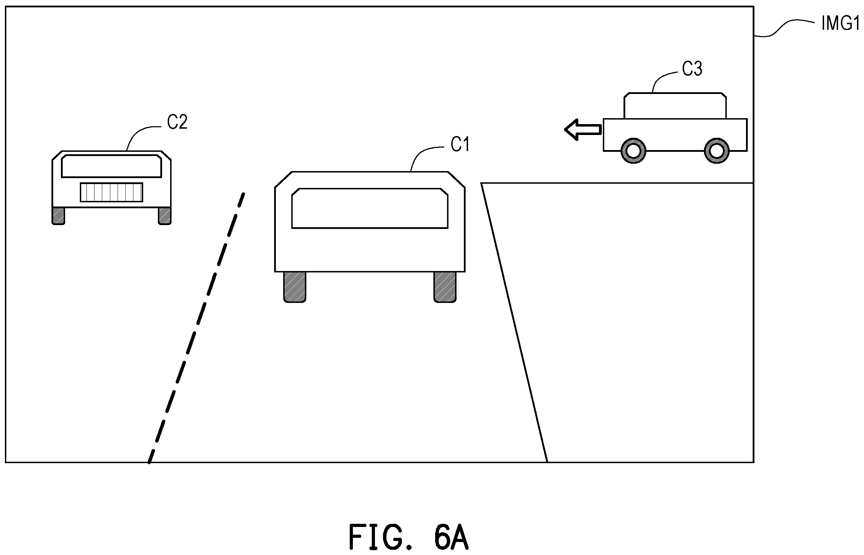

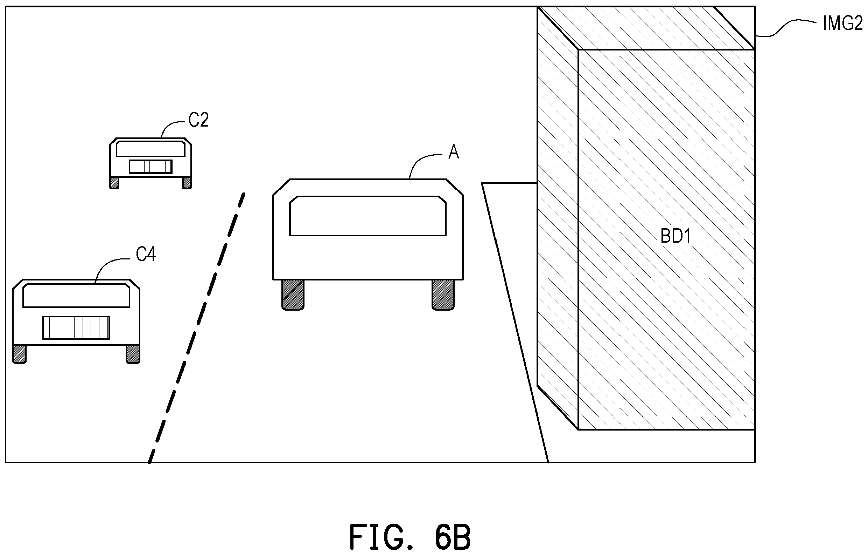

Referring to FIG. 5, FIG. 6A, and FIG. 6B as well, in step S411, the first camera 150 captures a first image IMG1 (e.g., shown in FIG. 5 and FIG. 6A) via a first field of view FOV1 of the front vehicle. In step S412, the second camera 250 captures a second image IMG2 (e.g., shown in FIG. 5 and FIG. 6B) via a second field of view FOV2 of the rear vehicle. The captured images are displayed on the displays/screens of the input/output devices 140 and 240 of the respective vehicle terminals.

Then, in step S421, the first processor 110 performs a first object recognition operation on the first image to identify one or more first objects (e.g., vehicle objects C1, C2, and C3 shown in FIG. 6A) in the first image IMG1. In step S422, the second processor 210 performs a second object recognition operation on the second image IMG2 to identify one or more second objects (e.g., vehicle objects A, C2, and C4, and a building object BD1 shown in FIG. 6A) in the second image IMG2. One of the one or more second objects is a front-vehicle object (e.g., the front-vehicle object A shown in FIG. 6B) corresponding to the front vehicle.

Then, in step S430, the second processor 210 further sets a first see-through area STA1 corresponding to the front vehicle in the second image IMG2 according to the front-vehicle object A. More specifically, the second processor 210 sets the first see-through area corresponding to the front vehicle in the second image according to at least one of the following conditions: an image area of the front-vehicle object and an object contour of the front-vehicle object. In other words, to achieve the effect of seeing through the front vehicle, the range of the first see-through area STA1 may be set to cover the entire contour of the front vehicle, or may be set to be slightly smaller than the entire contour of the front vehicle (to retain part of features (e.g., tires) of the front vehicle so that the rear vehicle can be aware of the presence of the front vehicle), but the disclosure is not limited thereto.

Then, in step S440, the first processor 110 further transmits the first image IMG1 to the rear-vehicle terminal 200 via the inter-vehicle connection NC.

Then, in step S450, the second processor 210 further identifies a first area image in the first image according to a first relative position between the front vehicle and the rear vehicle, and stitches the first area image to the first see-through area in the displayed second image to cover the image originally displayed in the first see-through area.

Specifically, the second processor 210 obtains an area and a shape of the first area image in the first image based on a projection algorithm according to the first relative position and the area and the shape of the first see-through area. The second processor 210 stitches the obtained first area image to the first see-through area in the second image.

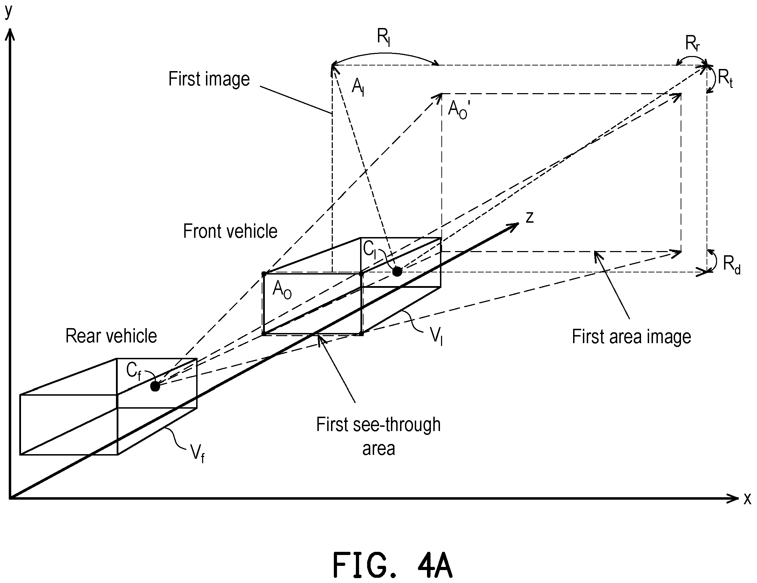

Referring to FIG. 4A, after determining a first see-through area Ao, the second processor 210 may determine a first area Ao' in a first image Ai based on a projection algorithm by referring to the field of view of the first see-through area Ao. Herein, C_{I} may be regarded as the position of the first camera 150 of a front vehicle Vi, and C_{f} may be regarded as the position of the second camera 250 of a rear vehicle V_{f}. Then, the image (i.e., first area image) within the first area Ao' is stitched to the first see-through area Ao of the second image.

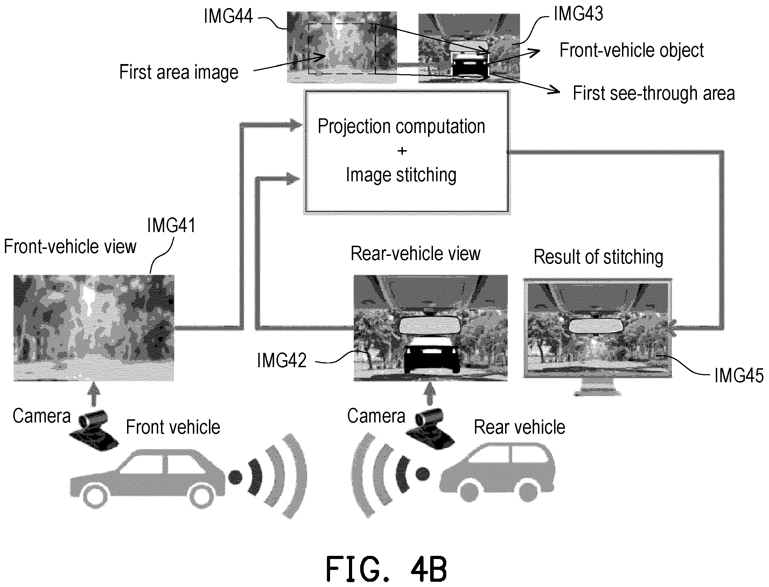

Reference may be made to FIG. 4B for the overall see-through effect of image stitching. In this example, the image captured by the camera of the front vehicle from the perspective of the front vehicle is IMG41. The front-vehicle object is visible in an image IMG42 captured by the camera of the rear vehicle from the perspective of the rear vehicle. The image IMG41 is transmitted to the rear vehicle. As shown in an image IMG43, the rear-vehicle terminal determines the position, the area, and the shape of the first see-through area according to the front-vehicle object, and determines the first area image in the first image according to the first see-through area (projection computation). Finally, the rear-vehicle terminal stitches the first area image to the first see-through area in the image IMG42 captured by the rear vehicle to form an image IMG45 (image stitching). It can be seen that the image of the front-vehicle object originally located in the first see-through area of the second image IMG42 is covered and replaced by the first area image.

Returning to FIG. 3B, then, in step S460, the first processor 110 further determines whether the one or more first objects include one or more first risk objects. Specifically, the first processor 110 determines whether the first object is the risk object according to at least one of the following conditions: a moving speed of the first object (e.g., the moving speed of the first object exceeds a speed threshold), an object type of the first object (e.g., the object type of the first object is "human"), a travel direction of the first object (e.g., the travel direction of the first object intersects with the travel direction of the front vehicle), a predicted moving path of the first object (e.g., a probability of collision between the front vehicle and the moving path predicted based on the travel direction and the speed of the first obj ect is higher than a collision probability threshold), and a relative position of the first object (e.g., the distance between the first object and the front vehicle is less than a distance threshold).

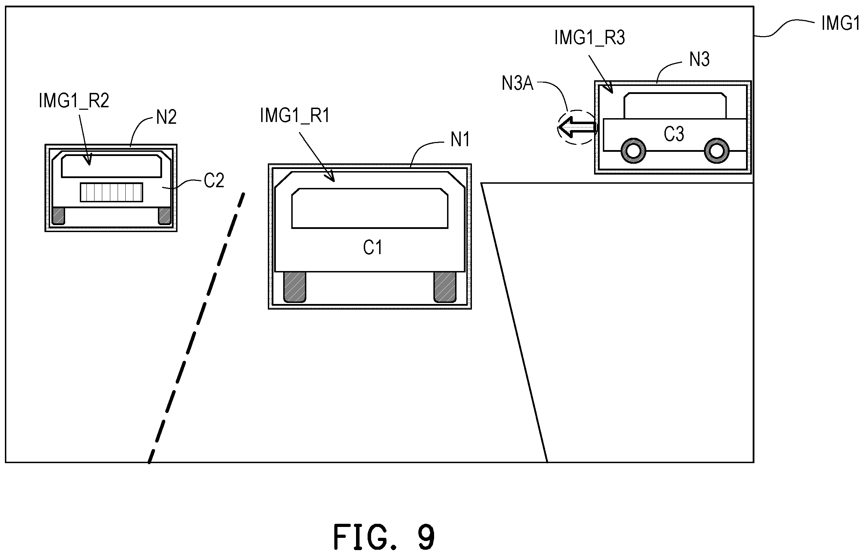

Then, in step S470, in response to determining that the one or more first objects include the one or more first risk objects, the first processor 110 further generates first risk object information corresponding to the one or more first risk objects, and transmits the first risk object information to the rear-vehicle terminal 200 via the inter-vehicle connection NC. In an embodiment, after identifying the first risk object, the front vehicle also marks the first risk object. For example, risk marks N1 to N3 correspond to the risk objects C1 to C3 in FIG. 9. In addition, as shown in FIG. 9, object images IMG1_R1 to IMG1_R3 corresponding to the risk objects C1 to C3 are packaged into the first risk object information. The risk mark may include an arrow mark (e.g., arrow mark N3A) used to indicate a travel direction A7 of the risk object.

Specifically, after identifying the risk object (first risk object) among the first objects, the first processor 110 packages an identification code, location information, and a corresponding object image (also known as a first risk object image) of each risk object into the first risk object information, and sends the first risk object information to the rear-vehicle terminal 200. That is, the second processor 210 may obtain the position and image of each risk object identified by the front vehicle according to the received first risk object information.

Then, in step S480, the second processor 210 further determines whether the one or more first risk objects are the one or more second objects according to the first risk object information. Specifically, the second processor 210 may compare the object image of each risk object in the first risk object information with the object image of the second object to determine whether the first risk object determined by the front-vehicle terminal 100 is one of the plurality of second objects in the second image IMG2 seen by the rear-vehicle terminal 200.

Then, in step S490, in response to determining that one or more first target objects among the one or more first risk objects are not the one or more second objects, the second processor 210 further marks the one or more first target objects in the displayed second image according to the first risk object information to warn of risks that are not visible in the second field of view of the rear vehicle.

Specifically, the second processor 210 determines a first position in the displayed second image to which each of the one or more first target objects is mapped according to the first risk object information, and displays one or more first marks corresponding to the one or more first target objects in the displayed second image according to the first position.

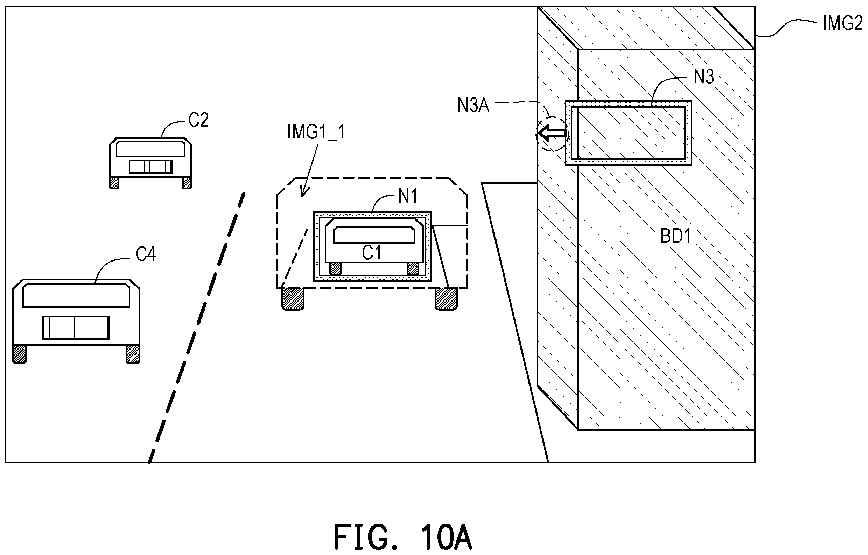

Referring to FIG. 6B, FIG. 9, and FIG. 10A, it is assumed that the determined first risk objects are C1 to C3, and the second objects are objects A, C2, C4, and BD1. As shown in FIG. 10A, regarding the first target objects C1 and C3 among the first risk objects that are originally not present in the second image, the second processor 210 displays corresponding risk marks N1 and N3 at the first positions determined to correspond to the target objects C1 and C3 in the second image IMG2. That is, regarding the risk objects (i.e., first target objects) that are not identified in the second image IMG2, the method provided in the embodiment of the disclosure can effectively mark the first target objects in the second image IMG2 to remind the user viewing the second image IMG2 and thereby ensure driving safety. In addition, for vehicles using autonomous driving, the method provided in the embodiment of the disclosure may also be used to enable the autonomous driving system of the rear vehicle to effectively identify the risk objects that the rear vehicle cannot see/perceive, and include the risk objects as one of factors to be considered for subsequent autonomous driving.

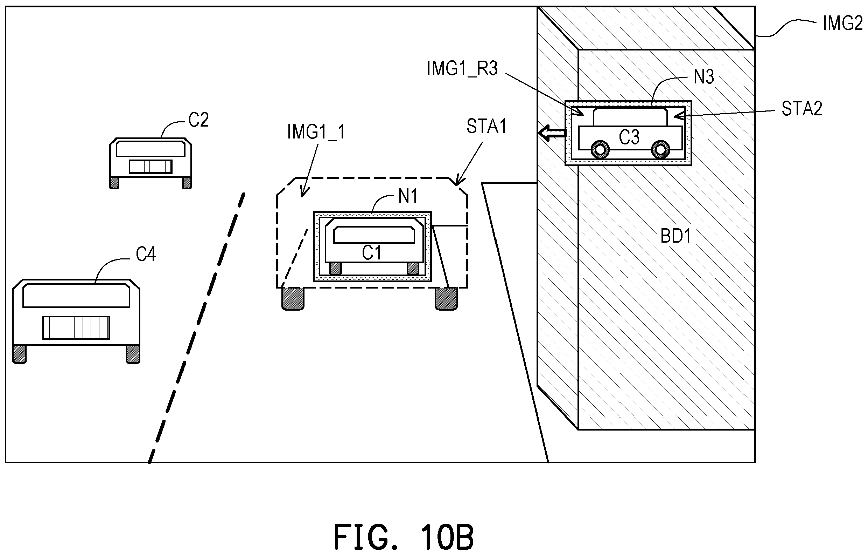

Referring to FIG. 10B, in an embodiment, the second processor 210 further determines whether the one or more first target objects are within the first see-through area. As shown in FIG. 10B, in response to determining that a second target object C3 among the one or more first target objects is not within the first see-through area STA1, the second processor 210 sets a second see-through area STA2 corresponding to the second target object C3 in the second image IMG2 according to the position information of the second target object C3. According to position information and a second target object image IMG1_R3 of the second target object, the second processor 210 stitches the second target object image IMG1_R3 to the second see-through area STA2 in the displayed second image IMG2 to cover the image (e.g., an image of part of the object BD1 originally displayed in the second see-through area STA2) originally displayed in the second see-through area STA2.

In other words, in the example of the above embodiment, the risk object C3 is originally not visible even via the first see-through area STA1. By additionally setting the second see-through area, the image of the risk object C3 determined by the front vehicle can pass through the obstacle seen by the rear vehicle without being blocked by the image of the obstacle, to be learned by the rear-vehicle terminal of the rear vehicle and displayed in the second image IMG2 displayed by the rear vehicle to further assist the driver/passenger or autonomous driving system of the rear vehicle to make corresponding determinations.

With reference to the example of FIG. 5 to FIG. 10C, the inter-vehicle communication see-through warning system and the used inter-vehicle communication see-through warning method in the embodiments of the disclosure will be comprehensively described below.

Referring to FIG. 5, it is assumed that on a two-way road, vehicles C1, A, and B travel in a first direction (toward the top of the view), vehicles C2 and C4 travel in a second direction, and a vehicle C3 travels in a third direction on a branch road in the front near an intersection. There is a building BD1 on the right side of the vehicle A. The vehicle A is the front vehicle in this embodiment, and its first camera captures a first image via the first field of view FOV1 (S411). The vehicle B is the rear vehicle in this embodiment, and its second camera captures a second image via the second field of view FOV2 (S412).

Referring to FIG. 6A and FIG. 6B, in this example, the first image IMG1 captured by the front-vehicle terminal is as shown in FIG. 6A. In the first image IMG1, it is seen that a vehicle C1 is in the front on the same lane, a vehicle C2 is coming from the opposite lane, and a vehicle C3 driving on a branch road in the front is approaching the intersection in the front. The second image IMG2 captured by the rear-vehicle terminal is as shown in FIG. 6B. In the second image IMG2, it is seen that a vehicle A is in the front on the same lane, vehicles C4 and C2 are coming one after another from the opposite lane, and a building BD1 is located on the right side.

In this embodiment, the front-vehicle terminal 100 identifies the first objects C1, C2, and C3 (S421), the rear-vehicle terminal 200 identifies the second objects A, C2, C4, and BD1 (S422), and the second object A is the front-vehicle object.

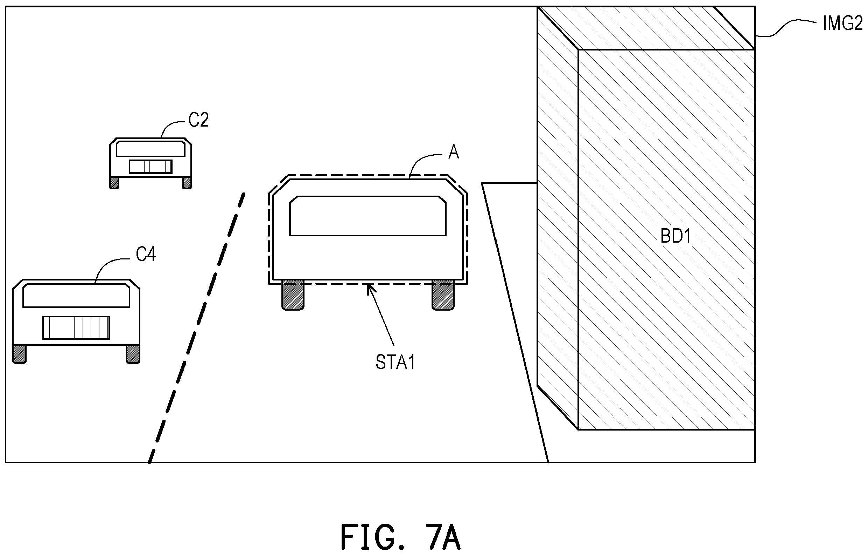

Referring to FIG. 7A, the rear-vehicle terminal 200 sets a first see-through area STA1 according to the front-vehicle object A (S430). The front-vehicle terminal 100 sends the first image IMG1 to the rear-vehicle terminal 200 (S440).

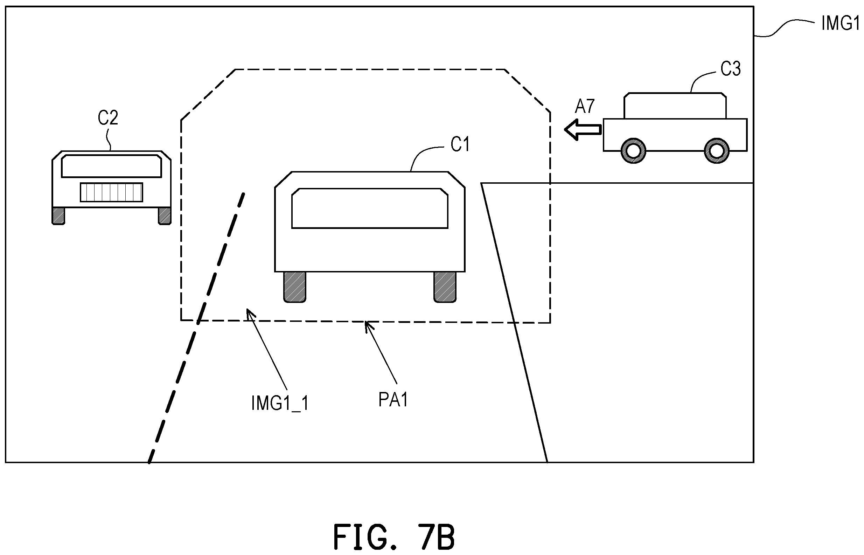

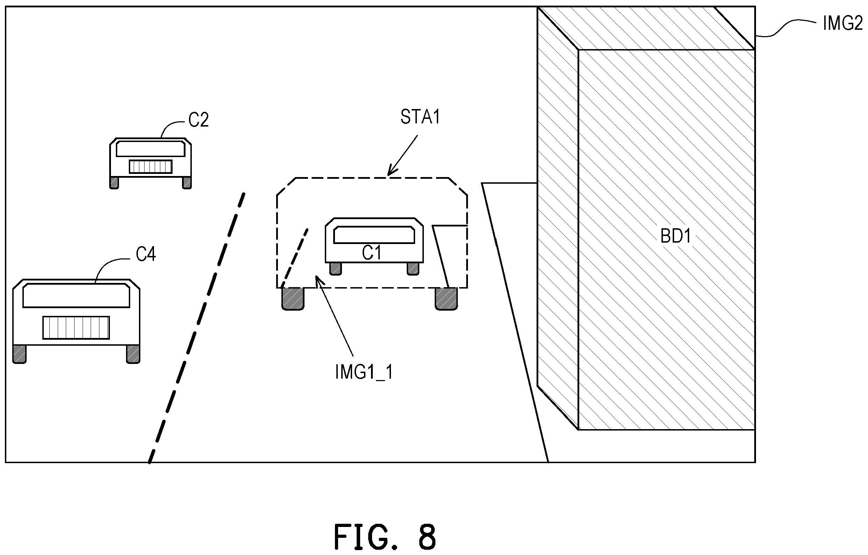

Referring to FIG. 7B, then, the rear-vehicle terminal 200 calculates a first area PA1 in the first image IMG1 (as shown in FIG. 5, a third field of view FOV3 set based on projection of the first see-through area STA1) and an included first area image IMG1_1. Then, referring to FIG. 8, the rear-vehicle terminal 200 stitches the first area image IMG1_1 to the first see-through area STA1 (S450).

Referring to FIG. 9, after identifying the first objects C1, C2, and C3, the front-vehicle terminal 100 also performs risk determination. The front-vehicle terminal 100 determines that the first objects C1, C2, and C3 are all first risk objects, and generates corresponding first risk object information. The first risk object information includes the position information and object images IMG1_R1, IMG1_R2, and IMG1_R3 of the first risk objects C1, C2, and C3, respectively, and the first risk object information is sent by the front-vehicle terminal 100 to the rear-vehicle terminal 200 (S470). In an embodiment, the front-vehicle terminal 100 may directly use risk marks N1, N2, and N3 to mark the first risk objects C1, C2, and C3.

Then, referring to FIG. 10A, after receiving the first risk object information, the rear-vehicle terminal 200 determines whether each of the first risk objects C1, C2, and C3 is one of the second objects C1, C2, C4, and BD1 (S480). In this example, the rear-vehicle terminal 200 determines that only the target objects C1 and C3 among the first risk objects C1, C2, and C3 are not the second objects, and generates corresponding risk marks N1 and N3 based on the first risk object information to mark the target objects C1 and C3 in the second image IMG2 (S490). The risk marks may include arrow marks (e.g., arrow mark N3A) used to indicate the travel direction of the risk object. In this manner, even if the building BD1 blocks the view of the rear vehicle, the rear-vehicle terminal 200 can still be aware that a risk object C3 moving toward a travel road section of the rear vehicle is present behind the building BD1. Based on the risk marks N3 and N3A displayed in the second image IMG2, the user/driver of the rear vehicle can also be aware that a risk object moving toward the travel road section of the rear vehicle is present behind the building BD1.

To make the risk situation clearer, referring to FIG. 10B, in an embodiment, in response to a risk object C3 not being in the first see-through area STA1, the rear-vehicle terminal 200 may further display the image IMG1_R3 corresponding to the risk object C3 in a second see-through area STA2 set in the second image IMG2 to provide a see-through effect for the image of the risk object C3. That is, the user/driver can see the risk object C3 (through the obstacle of the image of the building BD1) in the currently displayed second image IMG2.

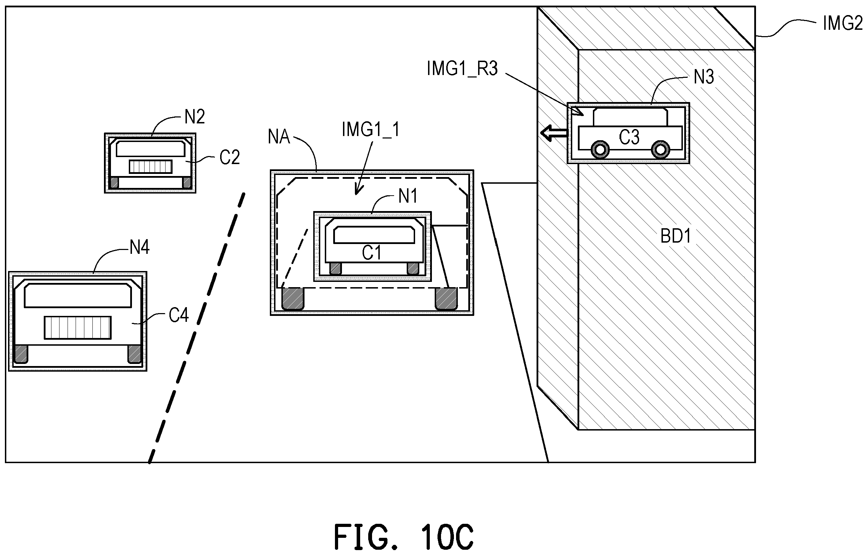

Referring to FIG. 10C, in an embodiment, the rear-vehicle terminal 200 may further determine whether the one or more second objects A, C2, and C4 include one or more second risk objects, and mark the one or more second risk objects in the displayed second image IMG2 (e.g., risk marks NA, N2, and N4).

Based on the above, in the inter-vehicle communication see-through warning system and the used inter-vehicle communication see-through warning method provided in the embodiments of the disclosure, the first image captured by the front vehicle and the information of potential risk objects may be transmitted via inter-vehicle communication between the front vehicle and the rear vehicle, such that the rear vehicle may correspondingly stitch one or more partial images in the first image to the second image captured by the rear vehicle to achieve a see-through effect and at the same time mark the risk objects and display the risk objects in the second image captured by the rear vehicle. In this manner, the ultimately displayed second image of the rear vehicle can prominently remind and display the presence of the risk objects to enhance the rear vehicle's awareness of the driving environment, ensure driving safety, and thereby improve driving efficiency.

## Claims

1. An inter-vehicle communication see-through warning system (10) comprising:
a front-vehicle terminal (100) arranged on a front vehicle and comprising a first processor (110), a first camera (150), and a first communication circuit device (120); and
a rear-vehicle terminal (200) arranged on a rear vehicle and comprising a second processor (210), a second camera (250), and a display, wherein
the first camera (150) is configured to capture a first image (IMG1, A_{I}, IMG41), the second camera (250) is configured to capture a second image (IMG2, IMG42), and the display is configured to display the second image (IMG2, IMG42),
in response to determining that one or more first objects in the first image (IMG1, A_{I}, IMG41) comprise one or more first risk objects, the first processor (110) generates first risk object information corresponding to the one or more first risk objects, and transmits the first risk object information to the rear-vehicle terminal (200) via an inter-vehicle connection (NC) between the front-vehicle terminal (100) and the rear-vehicle terminal (200), and
in response to determining that one or more first target objects among the one or more first risk objects are not one or more second objects in the second image (IMG2, IMG42), the second processor (210) marks the one or more first target objects in the displayed second image (IMG2, IMG42) according to the first risk object information to warn of risks that are not visible in a field of view of the rear vehicle.

2. The inter-vehicle communication see-through warning system (10) according to claim 1, wherein
the first processor (110) is configured to perform a first object recognition operation on the first image (IMG1, A_{I}, IMG41) to identify the one or more first objects in the first image (IMG1, Ai, IMG41),
the second processor (210) further performs a second object recognition operation on the second image (IMG2, IMG42) to identify the one or more second objects in the second image (IMG2, IMG42), wherein one of the one or more second objects is a front-vehicle object corresponding to the front vehicle,
the second processor (210) further sets a first see-through area corresponding to the front vehicle in the second image (IMG2, IMG42) according to the front-vehicle object,
the first processor (110) is further configured to transmit the first image (IMG1, Ai, IMG41) to the rear-vehicle terminal (200) via the inter-vehicle connection (NC), and
the second processor (210) is further configured to identify a first area image in the first image (IMG1, A_{I}, IMG41) according to a first relative position between the front vehicle and the rear vehicle, and stitch the first area image to the first see-through area in the displayed second image (IMG2, IMG42) to cover an image originally displayed in the first see-through area.

3. The inter-vehicle communication see-through warning system (10) according to claim 2, wherein
the second processor (210) determines whether the one or more second objects comprise one or more second risk objects, and
the second processor (210) marks the one or more second risk objects in the displayed second image (IMG2, IMG42).

4. The inter-vehicle communication see-through warning system (10) according to claim 2, wherein the first risk object information comprises:
location information respectively corresponding to the one or more first risk objects; and
first risk object images respectively corresponding to the one or more first risk objects.

5. The inter-vehicle communication see-through warning system (10) according to claim 4, wherein in the marking the one or more first target objects in the displayed second image (IMG2, IMG42) according to the first risk object information,
the second processor (210) determines a first position in the displayed second image (IMG2, IMG42) to which the one or more first target objects are respectively mapped according to the first risk object information, and displays one or more first marks corresponding to the one or more first target objects in the displayed second image (IMG2, IMG42) according to the first position.

6. The inter-vehicle communication see-through warning system (10) according to claim 5, wherein in response to determining that a second target object among the one or more first target objects is not within the first see-through area,
the second processor (210) sets a second see-through area corresponding to the second target object in the second image (IMG2, IMG42) according to position information of the second target object, and
the second processor (210) stitches a second target object image to the second see-through area in the displayed second image (IMG2, IMG42) according to the position information and the second target object image of the second target object to cover an image originally displayed in the second see-through area.

7. The inter-vehicle communication see-through warning system (10) according to claim 2, wherein the second processor (210) sets the first see-through area corresponding to the front vehicle in the second image (IMG2, IMG42) according to at least one of conditions below:
an image area of the front-vehicle object; and
an object contour of the front-vehicle object.

8. The inter-vehicle communication see-through warning system (10) according to claim 2, wherein in the identifying the first area image in the first image (IMG1, A_{I}, IMG41) according to the first relative position between the front vehicle and the rear vehicle and stitching the first area image to the first see-through area in the displayed second image (IMG2, IMG42),
the second processor (210) obtains an area and a shape of the first area image in the first image (IMG1, A_{I}, IMG41) based on a projection algorithm according to the first relative position and an area and a shape of the first see-through area, and
the second processor (210) stitches the obtained first area image to the first see-through area in the second image (IMG2, IMG42).

9. The inter-vehicle communication see-through warning system (10) according to claim 2, wherein in the determining whether the one or more first objects comprise one or more first risk objects, the first processor (110) determines whether the first object is the first risk object according to at least one of conditions below:
a moving speed of the first object;
an object type of the first object;
a travel direction of the first object;
a predicted moving path of the first object; and
a relative position of the first object.

10. An inter-vehicle communication see-through warning method, applicable to an inter-vehicle communication see-through warning system (10) comprising a front-vehicle terminal (100) arranged on a front vehicle and a rear-vehicle terminal (200) arranged on a rear vehicle, the inter-vehicle communication see-through warning method comprising:
capturing a first image (IMG1, A_{I}, IMG41) by the front-vehicle terminal (100), capturing a second image (IMG2, IMG42) by the rear-vehicle terminal (200), and displaying the second image (IMG2, IMG42);
in response to determining that one or more first objects in the first image (IMG1, A_{I}, IMG41) comprise one or more first risk objects, generating, by the front-vehicle terminal (100), first risk object information corresponding to the one or more first risk objects, and transmitting the first risk object information to the rear-vehicle terminal (200) via an inter-vehicle connection (NC) between the front-vehicle terminal (100) and the rear-vehicle terminal (200); and
in response to determining that one or more first target objects among the one or more first risk objects are not one or more second objects in the second image (IMG2, IMG42), marking, by the rear-vehicle terminal (200), the one or more first target objects in the displayed second image (IMG2, IMG42) according to the first risk object information to warn of risks that are not visible in a field of view of the rear vehicle.

## Amended claims

### Amended claims in accordance with Rule 137(2) EPC.

1. An inter-vehicle communication see-through warning system (10) comprising:
a front-vehicle terminal (100) arranged on a front vehicle and comprising a first processor (110), a first camera (150), and a first communication circuit device (120); and
a rear-vehicle terminal (200) arranged on a rear vehicle and comprising a second processor (210), a second camera (250), and a display, wherein the front-vehicle is within a front field of view of the second camera of the rear-vehicle, wherein
the first camera (150) is configured to capture a first image (IMG1, A_{I}, IMG41), the second camera (250) is configured to capture a second image (IMG2, IMG42), and the display is configured to display the second image (IMG2, IMG42), wherein the first image is showing a view in front of the front-vehicle, and the second image showing another view in front of the rear-vehicle, and
in response to determining that one or more first objects in the first image (IMG1, A_{I}, IMG41) comprise one or more first risk objects, the first processor (110) generates first risk object information corresponding to the one or more first risk objects, and transmits the first risk object information to the rear-vehicle terminal (200) via an inter-vehicle connection (NC) between the front-vehicle terminal (100) and the rear-vehicle terminal (200), the inter-vehicle communication see-through warning system (10) being **characterized in that**
the second processor (210) is configured to determine whether one or more first target objects among the one or more first risk objects are not one or more second objects in the second image (IMG2, IMG42); and
in response to determining that one or more first target objects among the one or more first risk objects are not one or more second objects in the second image (IMG2, IMG42), the second processor (210) marks the one or more first target objects in the displayed second image (IMG2, IMG42) according to the first risk object information to warn of risks that are not visible in a field of view of the rear vehicle.

2. The inter-vehicle communication see-through warning system (10) according to claim 1, wherein
the first processor (110) is configured to perform a first object recognition operation on the first image (IMG1, A_{I}, IMG41) to identify the one or more first objects in the first image (IMG1, A_{I}, IMG41),
the second processor (210) further performs a second object recognition operation on the second image (IMG2, IMG42) to identify the one or more second objects in the second image (IMG2, IMG42), wherein one of the one or more second objects is a front-vehicle object corresponding to the front vehicle,
the second processor (210) further sets a first see-through area corresponding to the front vehicle in the second image (IMG2, IMG42) according to the front-vehicle object,
the first processor (110) is further configured to transmit the first image (IMG1, A_{I}, IMG41) to the rear-vehicle terminal (200) via the inter-vehicle connection (NC), and
the second processor (210) is further configured to identify a first area image in the first image (IMG1, A_{I}, IMG41) according to a first relative position between the front vehicle and the rear vehicle, and stitch the first area image to the first see-through area in the displayed second image (IMG2, IMG42) to cover an image originally displayed in the first see-through area.

3. The inter-vehicle communication see-through warning system (10) according to claim 2, wherein
the second processor (210) determines whether the one or more second objects comprise one or more second risk objects, and
the second processor (210) marks the one or more second risk objects in the displayed second image (IMG2, IMG42).

4. The inter-vehicle communication see-through warning system (10) according to claim 2, wherein the first risk object information comprises:
location information respectively corresponding to the one or more first risk objects; and
first risk object images respectively corresponding to the one or more first risk objects.

5. The inter-vehicle communication see-through warning system (10) according to claim 4, wherein in the marking the one or more first target objects in the displayed second image (IMG2, IMG42) according to the first risk object information,
the second processor (210) determines a first position in the displayed second image (IMG2, IMG42) to which the one or more first target objects are respectively mapped according to the first risk object information, and displays one or more first marks corresponding to the one or more first target objects in the displayed second image (IMG2, IMG42) according to the first position.

6. The inter-vehicle communication see-through warning system (10) according to claim 5, wherein in response to determining that a second target object among the one or more first target objects is not within the first see-through area,
the second processor (210) sets a second see-through area corresponding to the second target object in the second image (IMG2, IMG42) according to position information of the second target object, and
the second processor (210) stitches a second target object image to the second see-through area in the displayed second image (IMG2, IMG42) according to the position information and the second target object image of the second target object to cover an image originally displayed in the second see-through area.

7. The inter-vehicle communication see-through warning system (10) according to claim 2, wherein the second processor (210) sets the first see-through area corresponding to the front vehicle in the second image (IMG2, IMG42) according to at least one of conditions below:
an image area of the front-vehicle object; and
an object contour of the front-vehicle object.

8. The inter-vehicle communication see-through warning system (10) according to claim 2, wherein in the identifying the first area image in the first image (IMG1, A_{I}, IMG41) according to the first relative position between the front vehicle and the rear vehicle and stitching the first area image to the first see-through area in the displayed second image (IMG2, IMG42),
the second processor (210) obtains an area and a shape of the first area image in the first image (IMG1, A_{I}, IMG41) based on a projection algorithm according to the first relative position and an area and a shape of the first see-through area, and
the second processor (210) stitches the obtained first area image to the first see-through area in the second image (IMG2, IMG42).

9. The inter-vehicle communication see-through warning system (10) according to claim 2, wherein in the determining whether the one or more first objects comprise one or more first risk objects, the first processor (110) determines whether the first object is the first risk object according to at least one of conditions below:
a moving speed of the first object;
an object type of the first object;
a travel direction of the first object;
a predicted moving path of the first object; and
a relative position of the first object.

10. An inter-vehicle communication see-through warning method, applicable to an inter-vehicle communication see-through warning system (10) comprising a front-vehicle terminal (100) arranged on a front vehicle and a rear-vehicle terminal (200) arranged on a rear vehicle, the inter-vehicle communication see-through warning method comprising:
capturing a first image (IMG1, A_{I}, IMG41) by the front-vehicle terminal (100), capturing a second image (IMG2, IMG42) by the rear-vehicle terminal (200), and displaying the second image (IMG2, IMG42), wherein the front-vehicle is within a front field of view of the rear-vehicle, wherein the first image is showing a view in front of the front-vehicle, and the second image showing another view in front of the rear-vehicle; and
in response to determining that one or more first objects in the first image (IMG1, A_{I}, IMG41) comprise one or more first risk objects, generating, by the front-vehicle terminal (100), first risk object information corresponding to the one or more first risk objects, and transmitting the first risk object information to the rear-vehicle terminal (200) via an inter-vehicle connection (NC) between the front-vehicle terminal (100) and the rear-vehicle terminal (200); the inter-vehicle communication see-through warning method being **characterized in** further comprising:
determining, by the rear-vehicle terminal (200), whether one or more first target objects among the one or more first risk objects are not one or more second objects in the second image (IMG2, IMG42); and
in response to determining that one or more first target objects among the one or more first risk objects are not one or more second objects in the second image (IMG2, IMG42), marking, by the rear-vehicle terminal (200), the one or more first target objects in the displayed second image (IMG2, IMG42) according to the first risk object information to warn of risks that are not visible in a field of view of the rear vehicle.
